# EUROPÄISCHE PATENTANMELDUNG

(11) **EP 0 942 216 A2**
(43) Veröffentlichungstag der Anmeldung: **15.09.1999**
(21) Anmeldenummer: 99250031.4
(22) Anmeldetag: 28.01.1999
(51) Int. Cl.: F16L 13/16

(54) **Vorrichtung zum Verbinden zweier Leitungsrohre unterschiedlicher Leitungsrohrsysteme**

(30) Priorität: 06.03.1998 DE 19810777; 19.01.1999 DE 19902732
(71) Anmelder: MANNESMANN Aktiengesellschaft, 40213 Düsseldorf (DE)
(72) Erfinder: Jost, Klaus-Dieter, 32457 Porta Westfalica (DE)
(74) Vertreter: Meissner, Peter E., Dipl.-Ing.

(57) **Zusammenfassung**

Die Erfindung betrifft eine Vorrichtung zum Verbinden zweier Leitungsrohre unterschiedlicher Leitungsrohrsysteme bestehend aus einem einen glatten Leitungsrohrabschnitt aufweisenden Übergangsstück, wobei der glatte Leitungsrohrabschnitt in ein Preßfittingelement einschiebbar und mittels einer von außen angesetzten Preßzange zu einer unlösbaren Rohrverbindung verbindbar ist. Dabei ist das Übergangsstück (1,11) als Klemmverschraubung ausgebildet und stoffschlüssig mit dem glatten Leitungsrohrabschnitt (3) oder einem Preßfittingelement (12) verbunden.

## Beschreibung

Die Erfindung betrifft eine Vorrichtung zum Verbinden zweier Leitungsrohre unterschiedlicher Leitungsrohrsysteme gemäß dem Oberbegriff des Anspruches 1.

Bei der Sanierung von Heizungsanlagen, bei dem beispielsweise das neu zu verlegende Leitungsrohrsystem aus glatten Leitungsrohrabschnitten und Preßfitting besteht, steht der Heizungsbauer vor dem Problem, wie der Übergang zur Altleitung herzustellen ist. Zum System Preßfitting selbst wird auf den Firmenprospekt Mannesmann Preßfitting-System / Heizung, Ausgabe 11/1994 verwiesen. Bei diesem System wird ein dünnwandiges glattes Leitungsrohr in ein Preßfittingelement, sei es Muffe, Bogen, T-Stück, Reduzierstück oder dergleichen eingeschoben und mittels einer von außen angesetzten Preßzange zu einer unlösbaren Verbindung miteinander verpreßt. Es gibt aber auch die Möglichkeit, daß auf einer an einem Fitting angeordneten Schiebelänge (Seite 26 des Firmenprospektes, Bogen 45° mit einseitiger Schiebelänge) ein Preßfitting oder ein Preßfittingelement mit einem daran angeschweißten Leitungsrohr aufgeschoben wird und dann die Verpressung erfolgt, wobei in diesem Fall die Schiebelänge quasi die Funktion eines glatten Leitungsrohrabschnittes übereinstimmt.

Als Lösung für das Verbinden mit der Altleitung wird beispielsweise ein Kombirohr angeboten (siehe S. 29 des Firmenprospektes Kombirohr mit Anschweißende), bei dem ein Ende als glatter Leitungsrohrabschnitt ausgebildet ist und das andere Ende als Schweißanschluß. Diese Lösung hat den Nachteil, daß der Heizungsbauer für die Verbindung des Kombirohres mit dem abgesägten Ende der alten Leitung immer Gas und Sauerstoff und das entsprechende Hilfsmaterial benötigt, um die Schweiß- bzw. Lötnaht herzustellen.

Eine andere Lösung besteht darin, das Preßfittingelement mit einem ein Gewinde aufweisenden Übergangsstück (S. 30 des Firmenprospektes) zu verbinden, wobei das Übergangsstück ein Außen- oder ein Innengewinde aufweisen kann. Diese Lösung hat den Nachteil, daß der Heizungsbauer auf dem abgetrennten Leitungsrohrende erst einmal ein Gewinde aufschneiden bzw. einschneiden muß, um das Übergangsstück auf- bzw. einschrauben zu können.

Aufgabe der Erfindung ist es, eine Vorrichtung zum Verbinden zweier Leitungsrohre unterschiedlicher Leitungsrohrsysteme anzugeben, mit dem die zuvor geschilderten Nachteile vermeidbar sind.

Diese Aufgabe wird ausgehend vom Oberbegriff in Verbindung mit den im kennzeichnenden Teil angegebenen Merkmalen des Anspruches 1 gelöst. Vorteilhafte Ausgestaltungen sind Bestandteil von Unteransprüchen.

Erfindungsgemäß ist das Übergangsstück als Klemmverschraubung ausgebildet und stoffschlüssig mit einem glatten Leitungsrohrabschnitt oder einem Preßfittingelement verbunden. Diese Kombination ermöglicht es dem Heizungsbauer bzw. dem Sanitärbauer, das Ende des alten Leitungsrohres glatt abzutrennen und das Übergangsstück aufzuschieben und durch Drehen einer Konusmutter auf dem Leitungsrohrende der Altleitung festzuklemmen. Dazu sind weder Schweiß-, noch Lötarbeiten, noch ein Gewindeschneiden erforderlich. Das andere Ende des Übergangsstückes ist wahlweise mit einem glatten Leitungsrohrabschnitt oder einem Preßfittingelement versehen, so daß das neuzuverlegende, aus Preßfittings und Leitungsrohren bestehende Leitungsrohrsystem direkt anschließbar ist.

Der glatte Leitungsrohrabschnitt bzw. das Preßfittingelement kann ein Gußstück z. B. aus Rotguß oder ein aus Blech hergestelltes Element aus C-Stahl oder Edelstahl oder Kupfer sein. In bekannter Weise weist das Preßfittingelement mindestens einen nach außen gerichteten Wulst auf, in dem ein Dichtring einlegbar ist.

In der Zeichnung wird anhand zweier Ausführungsbeispiele die erfindungsgemäß ausgebildete Vorrichtung näher erläutert. Es zeigen:
- Figur 1: in einer perspektivischen Darstellung eine erste Ausführungsform eines erfindungsgemäß ausgebildeten Übergangsstückes
- Figur 2: in einer quasi Explosionsdarstellung eine Ansicht (obere Teilhälfte) und einen Schnitt (untere Teilhälfte) von Figur 1
- Figur 3: wie Figur 1, jedoch eine andere Ausführungsform
- Figur 4: wie Figur 2, jedoch eine andere Ausführungsform

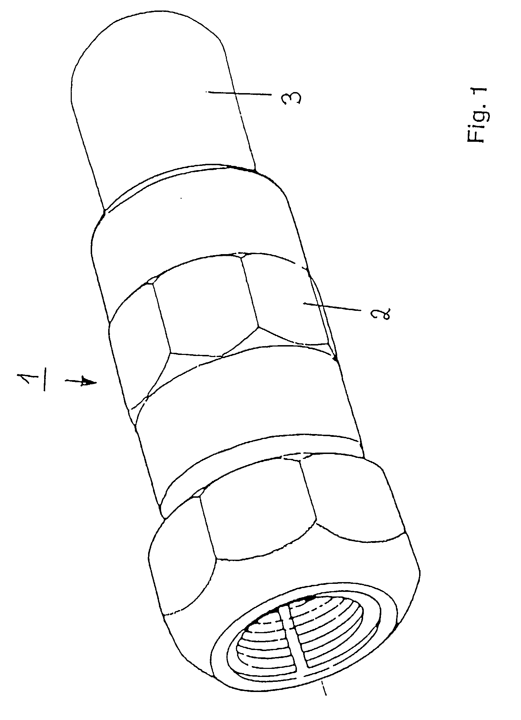

Figur 1 zeigt in einer perspektivischen Darstellung eine erste Ausführungsform eines erfindungsgemäß ausgebildeten Übergangsstückes 1. Es besteht aus einem Verschraubungskörper 2 einer Klemmverschraubung und einem damit stoffschlüssig verbundenen glatten Leitungsrohrabschnitt 3. Der glatte Leitungsrohrabschnitt 3 ist in ein Preßfitting bzw. Preßfittingelement 16 einschiebbar. Vorzugsweise ist der glatte Leitungsrohrabschnitt 3 mit dem Verschraubungskörper 2 mittels einer Schweißnaht verbunden.

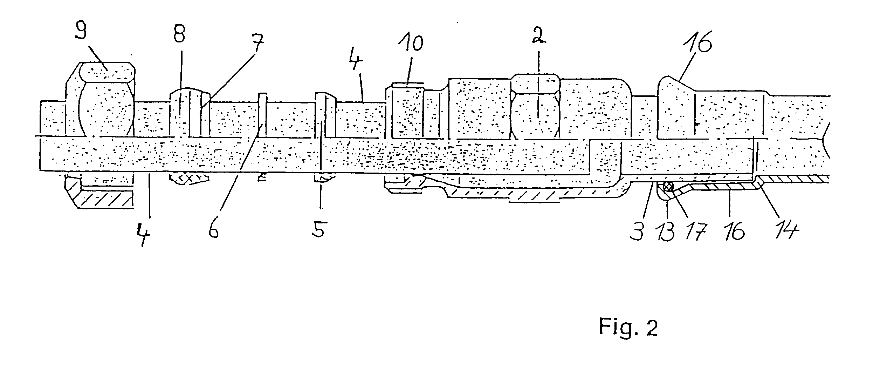

In Figur 2 sind in einer quasi Explosionsdarstellung die Einzelheiten dargestellt. Die auf dem abgeschnittenen Leitungsrohrende 4 der Altleitung aufgeschobene Klemmverschraubung weist den schon erwähnten Verschraubungskörper 2, einen Dichtring 5, einen Vorlegering 6, einen mit einer Markierungsrille 7 versehenen Klemmring 8 und eine Konusmutter 9 auf. Um das Leitungsrohrende 4 im Verschraubungskörper 2 abdichtend klemmen zu können, weist der Verschraubungskörper 2 einen Gewindeabschnitt 10 auf, der mit der Konusmutter 9 zusammenwirkt. Der Preßfitting bzw. das Preßfittingelement 16 weist in bekannter Weise einen Anschlag 14 für den eingeschobenen glatten Leitungsrohrabschnitt 3 und einen nach außen gerichteten Wulst 13 auf. In dem Wulst 13 ist ein Dichtring 17 angeordnet.

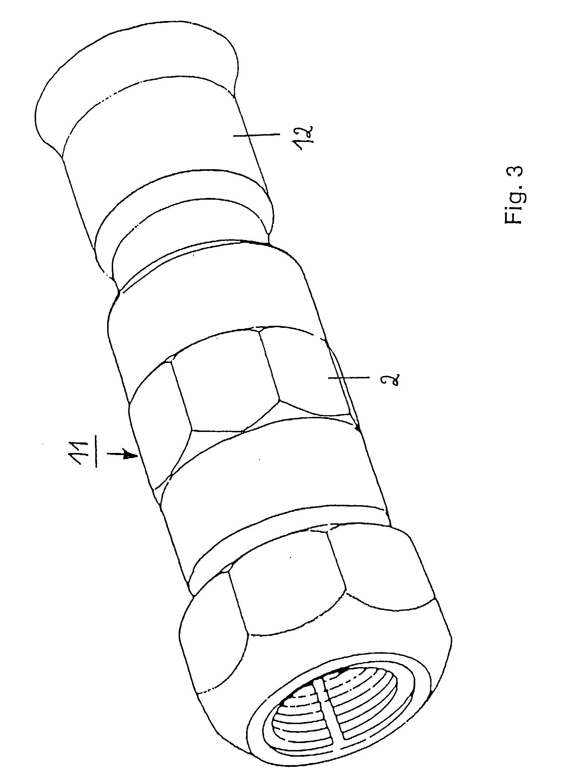

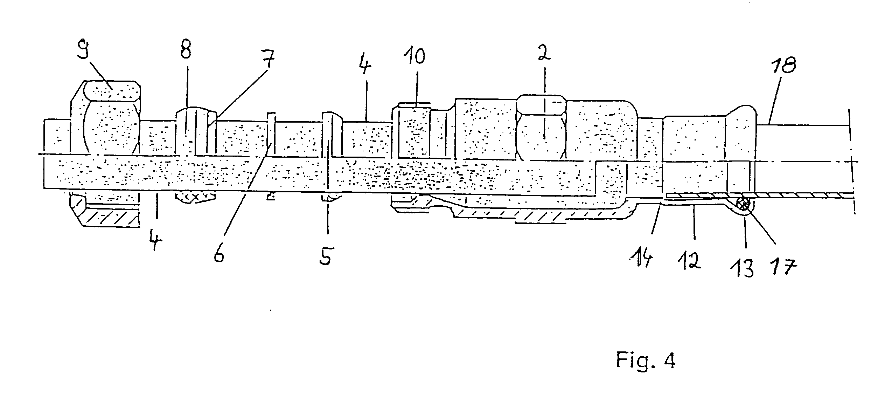

In Figur 3 und 4 ist eine zweite Ausführungsform dargestellt, wobei für gleiche Teile gleiche Bezugszeichen gewählt worden sind. Der Unterschied zur in Figur 1 und 2 dargestellten Ausführungsform besteht darin, daß das Übergangsstück 11 ein Preßfittingelement 12 aufweist. In diesem Falle ist es als Muffe ausgebildet und ebenfalls über Schweißen mit dem Verschraubungskörper 2 verbunden. In bekannter Weise weist das Preßfittingelement 12 einen nach außen gerichteten Wulst 13 auf, in den ein Dichtring 17 einlegbar ist. In das Preßfittingelement 12 ist ein glattendiges Leitungsrohrende 18 bis zum Anschlag 14 eingeschoben. Danach wird von außen auf das Preßfittingelement 12 eine Preßzange aufgesetzt und durch Verpressen Preßfittingelement 12 und das darin eingeschoben Leitungsrohrende 18 unlösbar miteinander verbunden.

## Patentansprüche

1. Vorrichtung zum Verbinden zweier Leitungsrohre unterschiedlicher Leitungsrohrsysteme bestehend aus einem einen glatten Leitungsrohrabschnitt aufweisenden Übergangsstück, wobei der glatte Leitungsrohrabschnitt in ein Preßfittingelement einschiebbar und mittels einer von außen angesetzten Preßzange zu einer unlösbaren Rohrverbindung verbindbar ist,
dadurch gekennzeichnet,
daß das Übergangsstück (1,11) als Klemmverschraubung ausgebildet und stoffschlüssig mit dem glatten Leitungsrohrabschnitt (3) oder einem Preßfittingelement (12) verbunden ist.

2. Vorrichtung nach Anspruch 1,
dadurch gekennzeichnet,
daß der glatte Leitungsrohrabschnitt (3) oder das Preßfittingelement (12) ein Gußstück aus verschiedenen metallischen Werkstoffen ist.

3. Vorrichtung nach Anspruch 2,
dadurch gekennzeichnet,
daß das Gußstück im Preßbereich mechanisch bearbeitet ist.

4. Vorrichtung nach Anspruch 1,
dadurch gekennzeichnet,
daß der glatte Leitungsrohrabschnitt (3) oder das Preßfittingelement (12) aus Blech aus verschiedenen metallischen Werkstoffen hergestellt ist.

5. Vorrichtung nach einem der Ansprüche 1 - 4,
dadurch gekennzeichnet,
daß das Preßfittingelement (12) als Muffe ausgebildet ist mit mindestens einem nach außen sich erstreckenden Wulst (13), in den ein Dichtring (15) einlegbar ist.
